# EUROPÄISCHE PATENTSCHRIFT

(11) **EP 0 446 611 B1**
(45) Veröffentlichungstag und Bekanntmachung des Hinweises auf die Patenterteilung: **24.05.1995**
(21) Anmeldenummer: 91101719.2
(22) Anmeldetag: 08.02.1991
(51) Int. Cl.: G05D 16/06

(54) **Gasdruck-Regler, der nach dem Servoprinzip arbeitet**
Gas pressure regulator operating in accordance with the servo principle
Régulateur de pression de gaz fonctionnant suivant le principe de l'asservissement

(30) Priorität: 16.03.1990 DE 4008493
(43) Veröffentlichungstag der Anmeldung: 18.09.1991
(73) Patentinhaber: JCI REGELUNGSTECHNIK GmbH, D-45143 Essen (DE)
(72) Erfinder: Zaunbrecher, Heinz, W-4300 Essen 1 (DE)
(74) Vertreter: Andrejewski, Walter

(56) Entgegenhaltungen:
- EP-A- 0 080 180
- EP-A- 0 230 477
- WO-A-85/02695

## Beschreibung

Die Erfindung betrifft einen Gasdruck-Regler, der nach dem Servoprinzip arbeitet, mit einer Ventileinrichtung, die einen Ventileingang, einen Ventilausgang, ein Stellglied mit hohler Ventilstange, Ventiltelleranordnung und Ventilsitzausbildung, eine Stellmembran in einer Stellmembrankammer, eine Federanordnung und eine Steuermagneteinrichtung aufweist, mit einer Einrichtung für die Zuführung von Servoenergie, die in der Ventileinrichtung angeordnete Gasführungseinrichtungen aufweist, denen die hohle Ventilstange angehört, und mit einem Reglerbauteil mit Reglermembran, die in einer Reglermembrankammer angeordnet und von einer Sollwertfeder einstellbar belastbar ist, wobei die Servoenergie vom Druck im Ventileingang über die hohle Ventilstange und eine Drossel in die Stellmembrankammer geleitet ist und die Stellmembrankammer über eine Düse mit der Reglermembrankammer verbunden ist, wobei die Reglermembrankammer über eine Istwertleitung an den Ventilausgang angeschlossen ist und wobei die Steuermagneteinrichtung einerseits des Stellgliedes sowie die Stellmembrankammer und das Reglerbauteil andererseits des Stellgliedes angeordnet sind. - Die Drossel in der hohlen Ventilstange und die Düse, die die Stellmembrankammer mit der Reglermembrankammer verbindet, bilden strömungstechnisch eine Kaskade.

Bei dem aus der Praxis bekannten Gasdruckregler, von dem die Erfindung ausgeht, besitzt die Ventiltelleranordnung lediglich einen Ventilteller mit zugeordnetem Ventilsitz. Die Federanordnung ist in der Stellmembran angeordnet und wirkt als Rückstellfeder auf die Stellmembran. Sie ist mit entsprechender Federkraft ausgerüstet. Auf den Ventilteller wirkt im geschlossenen Zustand andererseits der Druck im Ventileingang. Wegen dieser Anfangsbelastung des Ventiltellers in Schließrichtung und der additiv wirkenden Federkraft der Rückstellfeder ergibt sich ein relativ hoher Öffnungsstartdruck. Der Öffnungsstartdruck ist aufgebaut, wenn der Ventilteller am Ventilsitz gerade öffnet. Er ist damit auch vorhanden als Istwert oder Rückführdruck in der Regelmembrankammer. Dieser verhältnismäßig große Startdruck begrenzt den Volumenstrom beim Öffnen der Ventileinrichtung dieses Gasdruck-Reglers. Da nur ein Ventilteller und ein Ventilsitz vorhanden sind, sind bei Gegendruckbelastung große Magnetkräfte der Steuermagneteinrichtung erforderlich, was aufwendig ist.

Im übrigen sind Gadruck-Regler bekannt, die nach dem Direktprinzip arbeiten, bei dem die Ventilanordnung zwei Ventilteller mit zugeordneten Ventilsitzen aufweist. Die Doppelsitzanordnung eliminiert weitgehend den Einfluß des Eingangsdruckes. Bei direkt wirkenden Gasdruck-Reglern wird die Federkraft gegen eine mit dem Istwert gasdruckbeladene Membran ausgewogen. Das Stellglied mit den Ventiltellern wird während der Membranbewegung geöffnet oder bewegt sich bis Kraftgleichgewicht zwischen Sollwert-Federkraft und Istwert-Membrankraft eingetreten ist. Änderungen des Druckes im Ventileingang oder des Istwertes im Ventilausgang erzeugen die Sollwert/Istwert-Differenz. Dadurch wird die Bewegung des Stellgliedes eingeleitet bis Gleichgewicht vorhanden ist. Da es sich um Proportionalträger handelt, erhält man über die Federcharakteristik in Verbindung mit der Beeinflussung des Ventiltellers durch den Druck im Ventileingang lastabhängige Fehler. Im übrigen sind bei solchen Gasdruck-Reglern verhältnismäßig große Membranflächen erforderlich.

Der Erfindung liegt die Aufgabe zugrunde, bei einem Gasdruck-Regler des eingangs beschriebenen Aufbaus, der nach dem Servoprinzip arbeitet, den Öffnungsstartdruck zu reduzieren und den Volumenstrom beim Öffnungsstart zu erhöhen.

Zur Lösung dieser Aufgabe lehrt die Erfindung, daß die Ventiltelleranordnung einen steuermagnetseitigen Ventilteller mit zugeordnetem Ventilsitz und einen stellmembranseitigen Ventilteller mit zugeordnetem Ventilsitz aufweist, wobei der steuermagnetseitige Ventilsitz einen kleineren Durchmesser aufweist als der stellmembranseitige Ventilsitz, daß die Federanordnung als Schließfeder für die Ventileinrichtung mit der Steuermagneteinrichtung vereinigt ist und bei Stromausfall an der Steuermagneteinrichtung der Weg vom Ventileingang zum Ventilausgang geschlossen wird, daß die hohle Ventilstange der Einrichtung für die Zuführung der Servoenergie im Bereich zwischen den Ventiltellern und damit den Ventilsitzen zumindest eine Gaseintrittsbohrung aufweist, daß im Gasführungsweg der hohlen Ventilstange zwischen der Gaseintrittsbohrung und der Drossel ein Dichtelement angeordnet ist, welches über einen an den Anker der Steuermagneteinrichtung angeschlossenen, in der hohlen Ventilstange geführten Dichtstift bei erregtem Magneten der Steuermagneteinrichtung zu öffnen und bei entregtem Magneten der Steuermagneteinrichtung über die Federanordnung zu schließen ist, und daß die Federanordnung an einem Teller des aus der hohlen Ventilstange herausgeführten Dichtstiftes abgestützt ist, welcher Teller bei erregtem magneten der Steuermagneteinrichtung (13) einen Freilaufweg zu dem steuermagnetseitigen Ventilteller freiläßt. Es versteht sich, daß die hohle Ventilstange einen ausreichenden Querschnitt für die Zuführung der Servoenergie zur Stellmembrankammer aufweist. Nach bevorzugter Ausführungsform der Erfindung ist das Dichtelement von einer Andrückfeder belastet, welche zu dem Dichtstift hin wirkt.

Die Erfindung eliminiert durch das funktionelle Zusammenwirken der beschriebenen Merkmale die Nachteile der eingangs beschriebenen Gasdruck-Regler, die nach dem Servoprinzip arbeiten bzw. die nach dem Direktprinzip arbeiten, und erreicht, daß der erfindungsgemäße Gasdruck-Regler mit einem sehr geringen Öffnungsstartdruck und vergleichsweise großem Volumenstrom beim Öffnungsstartdruck arbeitet. Das gelingt, weil erfindungsgemäß im Gasführungsweg der hohlen Ventilstange zwischen der Gaseintrittsbohrung und der Drossel ein Dichtelement angeordnet ist, welches wie beschrieben arbeitet. Gleichzeitig wird eine zusätzliche Gasabsperrsicherheit bei elektrischem Spannungsabfall an der Steuermagneteinrichtung erreicht. Die Startkraft der Stellmembran wird von der Belastung, die aus dem auf den einzigen Ventilteller der bekannten Ausführungsform wirkenden Druck im Ventileingang resultiert, auf die Kraft reduziert, die aus der Durchmesserdifferenz der beiden Durchmesser der Ventilsitze bei der erfindungsgemäßen Ausführungsform entspricht. Damit wird der Startdruck ebenfalls reduziert, er ist auf sehr geringe Drücke reduzierbar.

Im folgenden wird die Erfindung anhand einer lediglich ein Ausführungsbeispiel darstellenden Zeichnung ausführlicher erläutert. Es zeigen
- Fig. 1: die schematische Darstellung eines Vertikalschnittes durch einen erfindungsgemäßen Gasdruck-Regler im geschlossenen Zustand der Ventileinrichtung,
- Fig. 2: den Gegenstand nach Fig. 1 im geöffneten Zustand der Ventileinrichtung,
- Fig. 3: den Gegenstand nach Fig. 1 mit Einzelheiten der baulichen Gestaltung in gegenüber den Fig. 1 und 2 wesentlichen vergrößertem Maßstab und
- Fig. 4: entsprechend der Fig. 1 die schematische Darstellung des Gasdruck-Reglers, von dem die Erfindung ausgeht.

Der in den Figuren dargestellte Gasdruck-Regler arbeitet nach dem Servo-Prinzip. Zum grundsätzlichen Aufbau gehören
eine Ventileinrichtung 1, die einen Ventileingang 2, einen Ventilausgang 3, ein Stellglied 4 mit hohler Ventilstange 5, Ventiltelleranordnung 6, 7 und Ventiltellersitzausbildung 8, 9, eine Stellmembran 10, in einer Stellmembrankammer 11, eine Federanordnung 12 und eine Steuermagneteinrichtung 13 aufweist,
eine Einrichtung für die Zuführung von Servoenergie, die in der Ventileinrichtung 1 angeordnete Gasführungseinrichtungen 14 aufweist, denen die hohle Ventilstange 5 angehört,
ein Reglerbauteil 15 mit Reglermembran 16, die in einer Reglermembrankammer 17 angeordnet und von einer Sollwertfeder 18 einstellbar belastet ist.

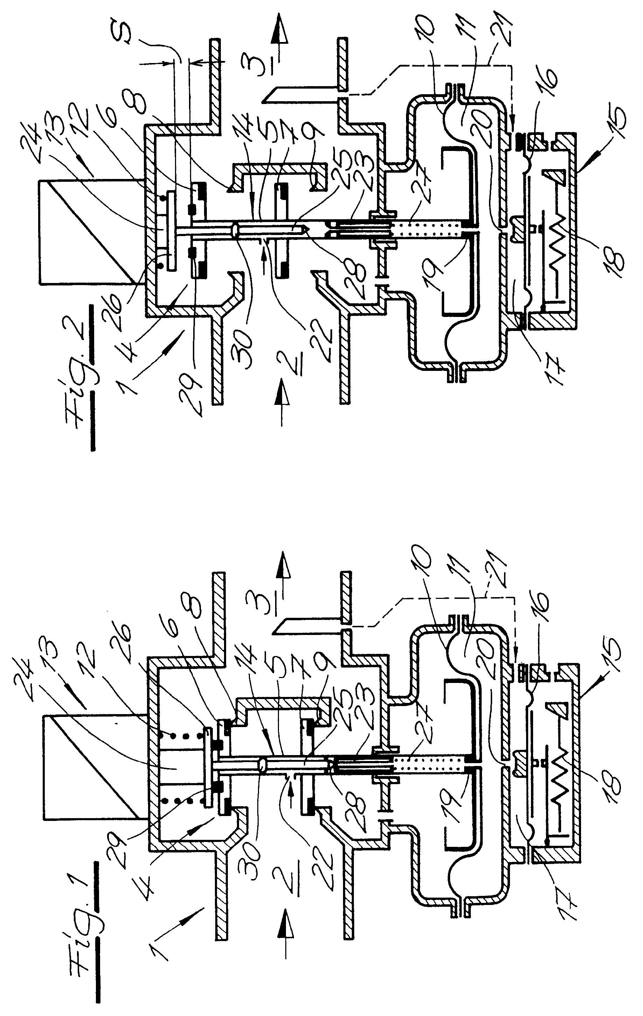

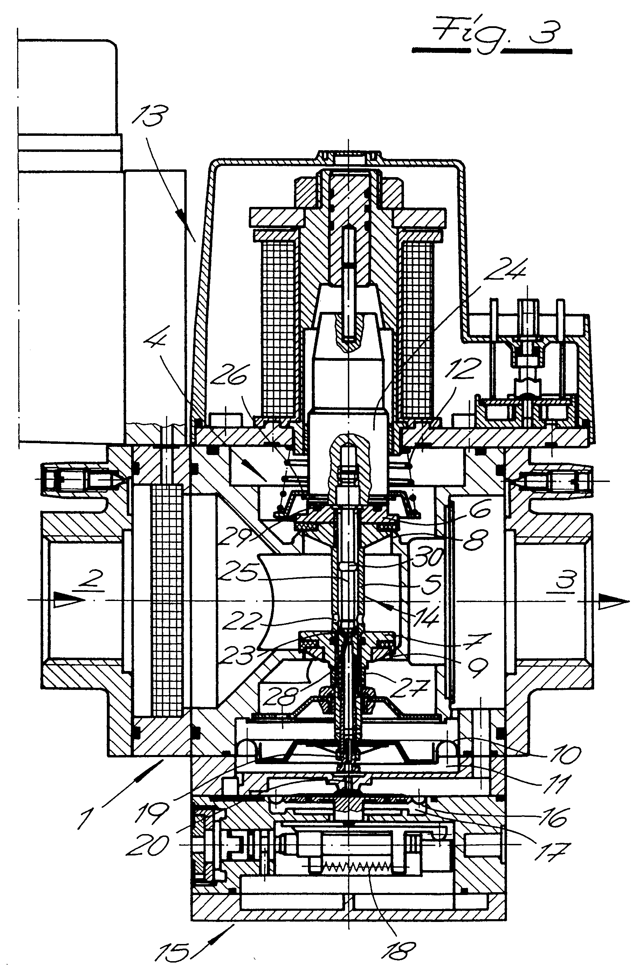

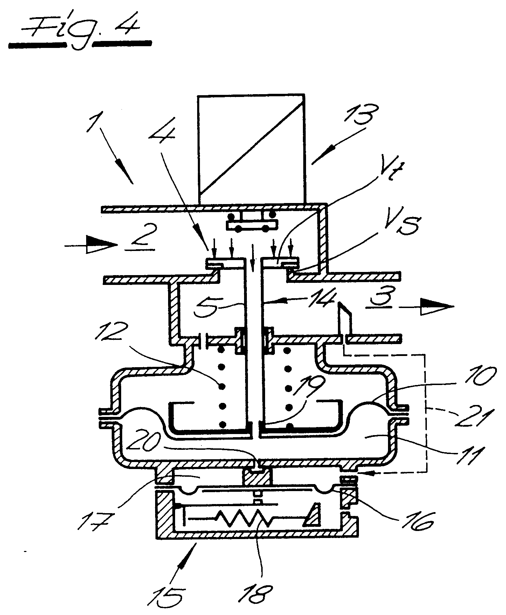

Die Anordnung ist zunächst so getroffen, daß die Servoenergie von Druck im Ventileingang 2 über die hohle Ventilstange 5 und eine Drossel 19 in die Stellmembrankammer 11 geleitet ist und die Stellmembrankammer 11 über eine Düse 20 mit der Reglermembrankammer 17 verbunden ist. Fernerhin ist die Reglermembrankammer 17 über eine Istwertleitung 21 an den Ventilausgang 3 angeschlossen. Einerseits des Stellgliedes 4 ist die Steuermagneteinrichtung 13 angeordnet, andererseits sind die Stellmembrankammer 11 und das Reglerbauteil 15 angeordnet. - Insoweit stimmen die Ausführungsformen nach den Fig. 1 bis 3 einerseits und nach Fig. 4 andererseits überein. Insoweit sind auch die gleichen Bezugszeichen eingetragen. Allerdings wurde in Fig. 4 die Ventiltelleranordnung mit Vt, die Ventilsitzausbildung mit Vs bezeichnet.

Bei der erfindungsgemäßen Ausführungsform nach Fig. 1 bis 3 weist die Ventiltelleranordnung einen steuermagnetseitigen Ventilteller 6 mit zugeordnetem Ventilsitz 8 und einen stellmembranseitigen Ventilteller 7 mit zugeordnetem Ventilsitz 9 auf. Der steuermagnetseitige Ventilsitz 8 besitzt einen kleineren Durchmesser als der stellmembranseitige Ventilsitz 9. Die Federanordnung 12 arbeitet lediglich als Schließfeder für die Ventileinrichtung und ist mit der Steuermagneteinrichtung 13 vereinigt. Sie schließt bei Stromausfall an der Steuermagneteinrichtung 13.

Aus einer vergleichenden Betrachtung der Fig. 1 und 2 entnimmt man, daß die hohle Ventilstange 5 der Einrichtung für die Zuführung der Servoenergie im Bereich zwischen den Ventiltellern 6, 7 und damit den Ventilsitzen 8, 9 im Ausführungsbeispiel eine Gaseintrittsbohrung 22 aufweist. Im Gasführungsweg der hohlen Ventilstange 5 zwischen der Gaseintrittsbohrung 22 und der Drossel 19 befindet sich ein Dichtelement 23, welches über einen an den Anker 24 der Steuermagneteinrichtung 13 angeschlossenen, in der hohlen Ventilstange 5 geführten Dichtstift 25 bei erregtem Magneten der Steuermagneteinrichtung 13 zu öffnen und bei entregtem Magneten der Steuermagneteinrichtung 13 über die Federanordnung 12 zu schließen ist. Die Federanordnung ist an einem Teller 26 des aus der hohlen Ventilstange 5 herausgeführten Dichtstiftes 25 abgestützt. Dieser Teller 26 läßt zu dem steuermagnetseitigen Ventilteller 6 einen Freilaufweg S frei, wie man aus einer vergleichenden Betrachtung der Fig. 1 und 2 entimmt. Es versteht sich, daß die hohle Ventilstange 5 einen ausreichenden Strömungsquerschnitt für die Zuführung der Servoenergie zu der Stellmembrankammer 11 aufweist. Im Ausführungsbeispiel ist das Dichtelement 23 von einer Andrückfeder 27 belastet, welche zu dem Dichtstift 25 hin wirkt.

Fig. 1 zeigt den Zustand, bei dem die Ventileinrichtung geschlossen ist. Der Magnet der Steuermagneteinrichtung 13 ist entregt. Der Magnetanker 24 ist folglich abgefallen. Die Kraft der Federanordnung 12 ist schließend wirksam. Zunächst schließt der Sitz 28 am Ende des Dichtstiftes 25 das federbelastete Dichtelement 23 in der hohlen Ventilstange 5. Der Dichtstift 25 schiebt das Dichtelement 23 so weit gegen die zugeordnete Andrückfeder 27, bis der Anker 24 der Steuermagneteinrichtung 13 auf dem oberen Ventilteller 6 aufliegt, und zwar im Ausführungsbeispiel unter Zwischenschaltung eines O-Ringes 29, Der Dichtstift 25 mit seiner Führungsausformung 30 ist so bemessen, daß ein genügend großes Spiel für die Bewegung des Dichtstiftes 25 und des Dichtelementes 23 in der hohlen Ventilstange 5 vorhanden ist. Im übrigen muß sichergestellt sein, daß der Strom der Hilfsenergie zu der Drossel 19 gelangt. Wird der Magnet der Steuermagneteinrichtung 13 eingeschaltet, so zieht der Anker 24 der Steuermagneteinrichtung 13 den Dichtstift 25 unter entsprechender Spannung der Federanordnung 12 in den Magneten bis gegen einen dort befindlichen, nicht gezeichneten Anschlag. Nunmehr gibt der Dichtstift 25 das Dichtelement 23 frei. Zunächst belastet der Druck im Ventileingang 2 noch die Differenzfläche zwischen den beiden Ventilsitzen 8, 9. Die Ventilteller 6, 7 verharren in Schließposition. Das Gas strömt durch die Gaseintrittsbohrung 22 in der hohlen Ventilstange 5 und über die Drossel 19 bis in den Raum unter der Stellmembran 10. Hier baut sich nunmehr der Startdruck unter der Stellmembran 10 auf und bewegt die Stellmembran 10 und damit die Ventilteller 6, 7 in Öffnungsrichtung. Mit weiterhin ansteigendem Druck unter der Stellmembran 10 in der Stellmembrankammer 11 werden die beiden Ventilteller 6, 7 so weit geöffnet, bis der Druck des Istwertes im Ventilausgang 3 erreicht ist. Er wird über die Istwertleitung 21 in das Reglerbauteil 15 eingeführt und beaufschlagt dort, wie in den Zeichnungen erkennbar, die Reglermembran 16 in der Reglermembrankammer 17, die andererseits über die Feder 18 mit dem Sollwert beaufschlagt ist. Folglich ist ein ruhiges Anlaufen dieses Gasdruck-Reglers sichergestellt, welches mit der Einschaltung der Steuermagneteinrichtung 13 beginnt. Der Öffnungsstartdruck ist verhältnismäßig klein, der Volumenstrom ist schon beim Öffnungsstartdruck verhältnismäßig hoch. Man erkennt unmittelbar, daß bei elektrischem Spannungsabfall an der Steuermagneteinrichtung 13 ein Schließen der Ventileinrichtung 1 erfolgt, wodurch die Sicherheit des erfindungsgemäßen Gasdruck-Reglers erhöht ist.

In der Fig. 4 erkennt man den Gasdruck-Regler, von dem die Erfindung ausgeht. Er ist zunächst so aufgebaut, wie einleitend in der Figurenbeschreibung erläutert. Die entsprechenden Bezugszeichen wurden eingetragen. Man erkennt, daß hier die Ventiltelleranordnung Vt lediglich einen Ventilteller und die Ventilsitzanordnung Vs lediglich einen Ventilsitz aufweist. Die Federanordnung 12 ist in der Stellmembrankammer 11 angeordnet und wirkt als Rückstellfeder auf die Stellmembran 10. Sie ist mit entsprechender Federkraft ausgelegt. Auf den Ventilteller wirkt andererseits im geschlossenen Zustand der Druck im Ventileingang 2, woraus die eingangs beschriebenen Nachteile resultieren.

## Patentansprüche

1. Gasdruck-Regler, der nach dem Servo-Prinzip arbeitet,
mit einer Ventileinrichtung, die einen Ventileingang, einen Ventilausgang, ein Stellglied mit hohler Ventilstange, Ventiltelleranordnung und Ventilsitzausbildung, eine Stellmembran in einer Stellmembrankammer, eine Federanordnung und eine Steuermagneteinrichtung aufweist,
mit einer Einrichtung für die Zuführung von Servoenergie, die in der Ventileinrichtung angeordnete Gasführungseinrichtungen aufweist, denen die hohle Ventilstange angehört, und
mit einem Reglerbauteil mit Reglermembran, die in einer Reglermembrankammer angeordnet und von einer Sollwertfeder einstellbar belastbar ist,
wobei die Servoenergie vom Druck im Ventileingang über die hohle Ventilstange und eine Drossel in die Stellmembrankammer geleitet ist und die Stellmembrankammer über eine Düse mit der Regelmembrankammer verbunden ist, wobei die Reglermembrankammer über eine Istwertleitung an den Ventilausgang angeschlossen ist und wobei die Steuermagneteinrichtung einerseits des Stellgliedes sowie die Stellmembrankammer und das Reglerbauteil andererseits des Stellgliedes angeordnet sind, **dadurch gekennzeichnet**, daß die Ventiltelleranordnung einen steuermagnetseitigen Ventilteller (6) mit zugeordnetem Ventilsitz (8) und einen stellmembranseitigen Ventilteller (7) mit zugeordnetem Ventilsitz (9) aufweist,
wobei der steuermagnetseitige Ventilsitz (8) einen kleineren Durchmesser aufweist als der stellmembranseitige Ventilsitz (9),
daß die Federanordnung (12) als Schließfeder für die Ventileinrichtung (1) mit der Steuermagneteinrichtung (13) vereinigt ist und bei Stromausfall an der Steuermagneteinrichtung (13) der Weg vom Ventileingang zum Ventilausgang geschlossen wird, daß die hohle Ventilstange (5) der Einrichtung für die Zuführung der Servoenergie im Bereich zwischen den Ventiltellern (6, 7) und damit den Ventilsitzen (6, 9) zumindest eine Gaseintrittsbohrung (22) aufweist,
daß im Gasführungsweg der hohlen Ventilstange (5) zwischen der Gaseintrittsbohrung (22) und der Drossel (19) ein Dichtelement (23) angeordnet ist, welches über einen an den Anker (24) der Steuermagneteinrichtung (13) angeschlossenen, in der hohlen Ventilstange (5) geführten Dichtstift (25) bei erregtem Magneten der Steuermagneteinrichtung (13) zu öffnen und bei entregtem Magneten der Steuermagneteinrichtung (13) über die Federanordnung (12) zu schließen ist, und
daß die Federanordnung (12) an einem Teller (26) des aus der hohlen Ventilstange (5) herausgeführten Dichtstiftes (25) abgestützt ist, welcher Teller (26) bei erregtem magneten der Steuermagneteinrichtung (13) einen Freilaufweg (S) zu dem steuermagnetseitigen Ventilteller (6) freiläßt.

2. Gasdruck-Regler nach Anspruch 1, dadurch gekennzeichnet, daß das Dichtelement (23) von einer Andrückfeder (27) belastet ist, welche zu dem Dichtstift (25) hin wirkt.

## Claims

1. A gas pressure valve which operates according to the servo principle,
having a valve device which comprises a valve inlet, a valve outlet, an actuator with a hollow valve stem, a valve head arrangement and a valve seat formation, an operating diaphragm in an operating diaphragm chamber, a spring arrangement and an operating magnet device,
having a device for the supply of servo energy which comprises gas conveying devices disposed in the valve device, of which the hollow valve stem forms part, and
having a regulator component with a regulator diaphragm which is disposed in a regulator diaphragm chamber and which can be adjustably loaded by a set value spring,
wherein the servo energy of the pressure in the valve inlet is conveyed via the hollow valve stem and a throttle into the operating diaphragm chamber and the operating diaphragm chamber is connected to the regulating diaphragm chamber via a nozzle, wherein the regulator diaphragm chamber is connected to the valve outlet via an actual value line and wherein the operating magnet device is disposed on one side of the actuator and the operating diaphragm chamber and the regulator component are disposed on the other side of the actuator, characterised in that the valve head arrangement comprises a valve head (6) on the operating magnet side with an associated valve seat (8), and a valve head (7) on the operating diaphragm side with an associated valve seat (9),
wherein the valve seat (8) on the operating magnet side has a smaller diameter than the valve seat (9) on the operating diaphragm side,
that the spring arrangement (12) is combined with the operating magnet device (13) as a closure spring for the valve device (1) and in the absence of flow at the operating magnet device (13) the path from the valve inlet to the valve outlet is closed, that the hollow valve stem (5) of the device has at least one gas inlet hole (22) for the supply of servo energy in the region between the valve heads (6, 7) and thus between the valve seats (8, 9),
that a sealing element (23) is disposed in the gas conveying path of the hollow valve stem (5) between the gas inlet hole (22) and the throttle (19), which sealing element is designed to open, via a sealing pin (25) which is attached to the armature (24) of the operating magnet device (13) and which is guided in the hollow valve stem (5), when the magnet of the operating magnet device (13) is energised, and which is designed to close via the spring arrangement (12) when the magnet of the operating magnet device (13) is de-energised, and
that the spring arrangement (12) is supported on a disc (26) on the sealing pin (25) which is led out of the hollow valve stem (5), which disc (26) leaves a free running path (S) open to the valve head (6) on the operating magnet side when the magnet of the operating magnet device (13) is energised.

2. A gas pressure regulator according to claim 1, characterised in that the sealing element (23) is loaded by a contact pressure spring (27) which acts towards the sealing pin (25).

## Revendications

1. Régulateur de pression de gaz fonctionnant suivant le principe de l'asservissement, avec un système de soupape comprenant une entrée de soupape, une sortie de soupape, un organe de réglage avec une tige de soupape creuse, un système de tête de soupape et une conformation de siège de soupape, une membrane de réglage dans une chambre de membrane de réglage, un système de ressort et un système d'électro-aimant de commande, avec un dispositif pour l'amenée de l'énergie d'asservissement équipé de dispositifs de conduite de gaz logés dans le système de soupape et comprenant la tige de soupape creuse, et avec un élément de réglage avec une membrane de réglage laquelle est disposée dans une chambre de membrane de réglage et peut être sollicitée de manière réglable par un ressort de valeur de consigne, l'énergie d'asservissement étant amenée par la pression à l'entrée de la soupape, par l'intermédiaire de la tige de soupape creuse et d'un étrangleur, dans la chambre de membrane de commande laquelle communique par l'intermédiaire d'une buse avec la chambre de membrane de réglage, la chambre de membrane de réglage étant raccordée par l'intermédiaire d'une conduite de valeur effective à la sortie de la soupape, et le système d'électro-aimant de commande étant placé sur l'un des côtés de l'organe de réglage tandis que l'élément de réglage est disposé sur l'autre côté de l'organe de réglage, **caractérisé en ce** que le système de tête de soupape comprend une tête de soupape (6) située du côté électro-aimant de commande, avec un siège de soupape (8) associé, et une tête de soupape (7) située du côté membrane de commande, avec un siège de soupape (9) associé, le siège de soupape (8) situé du côté électro-aimant de commande présentant un diamètre inférieur à celui du siège de soupape (9) situé du côté membrane de commande, que le système de ressort (12) agissant comme ressort de fermeture pour le système de soupape (1) est réuni avec le système d'électro-aimant de commande (13), qu'en cas de coupure de courant sur ledit système d'électro-aimant de commande (13), le chemin entre l'entrée et la sortie de la soupape est fermé, que la tige de soupape creuse (5) du système comporte pour l'amenée de l'énergie d'asservissement, au moins un alésage d'entrée de gaz (22) dans la région entre les sièges de soupape (6, 7) et donc les sièges de soupape (8, 9), que dans le chemin d'amenée de gaz de la tige de soupape creuse (5), entre l'alésage d'entrée de gaz (22) et l'étrangleur (19), est disposé un élément d'étanchéité (23) qui, par l'intermédiaire d'une tige d'étanchéité (25) couplée avec l'induit (24) du système d'électro-aimant de commande (13) et guidée dans la tige de soupape creuse (5), doit être ouvert à l'état d'excitation de l'aimant du système d'électro-aimant de commande (13), et fermé à l'état de désexcitation de l'aimant du système d'électro-aimant de commande (13) par l'intermédiaire du système de ressort (12), et que le système de ressort (12) prend appui sur une rondelle (26) de la tige d'étanchéité (25) sortie de la tige de soupape creuse (5), ladite rondelle (26) laissant subsister, à l'état d'excitation de l'aimant du système d'électro-aimant de commande (13), un passage libre (S) vers la tête de soupape (6) située du côté électro-aimant de commande.

2. Régulateur de pression de gaz selon la revendication 1, caractérisé en ce que l'élément d'étanchéité (23) est chargé par un ressort de pression (27) qui agit en direction de la tige d'étanchéité (25).
